# EUROPEAN PATENT SPECIFICATION

(11) **EP 4 138 161 B1**
(45) Date of publication and mention of the grant of the patent: **15.04.2026**
(21) Application number: 21855555.5
(22) Date of filing: 11.08.2021
(51) Int. Cl.: H01M 4/66, B32B 7/12, B32B 15/08, B32B 15/085, B32B 15/09, B32B 27/28, B32B 15/18, B32B 15/20, B32B 27/30, B32B 27/32, B32B 27/34, B32B 27/36, B32B 27/40, B32B 27/42, H01M 10/0525

(54) **CURRENT COLLECTOR, PREPARATION METHOD THEREFOR, AND APPLICATION THEREOF**
STROMKOLLEKTOR, HERSTELLUNGSVERFAHREN DAFÜR UND ANWENDUNG DAVON
COLLECTEUR DE COURANT, SON PROCÉDÉ DE PRÉPARATION ET SON APPLICATION

(30) Priority: 11.08.2020 CN 202010800306
(43) Date of publication of application: 22.02.2023
(73) Proprietor: Zhuhai CosMX Battery Co., Ltd., Zhuhai, Guangdong 519180 (CN)
(72) Inventor: ZHAO, Wei, Zhuhai, Guangdong 519180 (CN); LI, Suli, Zhuhai, Guangdong 519180 (CN); LI, Junyi, Zhuhai, Guangdong 519180 (CN); XU, Yanming, Zhuhai, Guangdong 519180 (CN)
(74) Representative: Studio Torta S.p.A.
(86) International application number: PCT/CN2021/111991
(87) International publication number: WO 2022/033504

(56) References cited:
- WO-A1-2019/153277
- CN-A- 1 992 398
- CN-A- 108 336 357
- CN-A- 108 336 357
- CN-A- 111 509 233
- CN-A- 111 900 413
- CN-B- 107 123 812
- CN-C- 100 527 492
- KR-A- 20120 098 239

## Description

### TECHNICAL FIELD

The present application relates to a current collector and a preparation method and application thereof, belonging to the field of lithium ion battery technologies.

### BACKGROUND

Current collectors of the conventional lithium ion batteries mostly use a metal foil, a positive electrode usually uses metal aluminum foil, and a negative electrode usually uses metal copper foil, but once a short circuit occurs inside the battery, the current cannot be cut off, which would eventually lead to heat buildup and then thermal runaway.

In recent years, some researchers have used a new type of current collector to replace the conventional metal current collector. This new type of current collector usually uses a nonconductive polymer film as a substrate, and a layer of metal is plated on both sides of the substrate by vacuum evaporation, electroplating or other manner. For example, metal aluminum is plated on both sides of PET (polyethylene terephthalate) film and used as the positive current collector, and metal copper is plated on both sides of PET (polyethylene terephthalate) film and used as the negative current collector. These composite current collectors improve safety performance of the battery to some extent, and can also reduce the weight of the current collector and further increase the weight energy density of the battery.

However, during the subsequent welding between the current collectors or the welding between the current collectors and external tabs, technical problems such as difficult welding or poor welding will occur, which seriously affects the practical popularization and application of the composite current collector.

CN108336357A describes an ultralight lithium ion battery current collector including a PET layer, where two ends of the PET layer are respectively clamped with a U-shaped sheet metal, and side surfaces of two sides of the PET layer located between the sheet metals at the both ends of the PET layer are plated with an upper metal layer and a lower metal layer.

CN107123812B describes a positive electrode current collector and a preparation method and an application thereof, the positive electrode current collector has a multilayered structure and includes a plastic thin film, a bonding force enhancement layer, an aluminum metal coating layer and an anti-oxidization layer are sequentially coated on upper and lower surfaces of the plastic thin film.

KR20120098239A describes a thin film battery which includes: a flexible metal laminate plate including a polymer film and a first current collector disposed on the polymer film; a first electrode formed on the flexible metal laminate plate; a first electrolyte formed on the first electrode; a second electrode having a polarity different than the first electrode and formed on the electrolyte; and a second current collector formed on the second electrode.

CN100527492C describes a battery current collector including a polymer layer and a metal layer coated on the polymer layer, where a partial region of the polymer layer is exposed.

WO2019153277A1 describes a battery, a battery cell and a current collector, the current collector includes a base membrane, and a first metal layer and a second metal layer respectively disposed on two sides of the base membrane, the base membrane includes a first region and a second region, the base membrane in the second region is provided with a through hole, and the first metal layer is connected with the second metal layer through the through hole.

### SUMMARY

The present application is defined in the appended set of claims. The present application provides a current collector which, by setting the structures of functional layers that constitute the current collector, not only reduces the welding difficulty of the current collector, improving welding yield, but also reduces ohmic impedance of welding points.

The present application further provides an electrode plate, and the electrode plate includes the current collector described above, so the electrode plate has a relative low internal resistance, which contributes to an efficient transmission of ions inside the battery.

The present application further provides a lithium ion battery, the lithium ion battery includes the electrode plate described above, and thus the electrode plate has a relative low internal resistance, such that the cycle life and the safety performance are significantly improved.

The present application provides a current collector, including a first metal layer and a second metal layer, which are provided in a laminated manner, where at least one first region and at least one second region are included between the first metal layer and the second metal layer, and the first region and the second region are alternately arranged in a first direction;
the first region is disposed with a polymer layer, and the polymer layer is respectively bonded to the first metal layer and the second metal layer through an adhesive layer.

In the current collector described above, a thickness of the first metal layer and/or the second metal layer is 0.1-5µm.

In the current collector described above, the thickness of the first metal layer and/or the second metal layer is 0.5-2µm.

In the current collector described above, a thickness of the polymer layer is 1-15µm.

In the current collector described above, the thickness of the polymer layer is 3-10µm.

In the current collector described above, a thickness of the adhesive layer is 0.01-3µm.

In the current collector described above, the thickness of the adhesive layer is 0.1-1µm.

In the current collector described above, a material of the first metal layer and/or the second metal layer is selected from at least one of aluminum, copper, nickel, titanium, silver, stainless steel, nickel-copper alloy and aluminum-zirconium alloy.

In the current collector described above, a material of the polymer layer is selected from at least one of polyterephthalate, polyamide, polyimide, polyethylene, polypropylene, polystyrene, polyvinyl chloride, polyethylene terephthalate, polybutylene terephthalate, poly(p-phenylene terephthamide), ethylene propylene rubber, acrylonitrile-butadiene-styrene copolymer, polyvinyl formal, polyvinyl butyral, polyurethane, polyacrylonitrile, polyvinyl acetate, polyoxymethylene, phenolic resin, epoxy resin, polytetrafluoroethylene, polyvinylidene fluoride, silicone rubber, polycarbonate, polysulfone, polyethersulfone and polyphenylene ether.

In the current collector described above, a material of the adhesive layer is selected from at least one of a polyurethane binder, a polyacrylic resin binder, a polyvinyl acetate binder, an urea-formaldehyde resin binder, an epoxy resin binder, and a coupling agent.

In the current collector described above, in the first direction, a length of the first region is greater than or equal to a length of the second region.

The present application further provides an electrode plate, the electrode plate includes the current collector according to any one described above.

The present application further provides a lithium ion battery, and the lithium ion battery includes the electrode plate described above.

The current collector of the present application includes a first metal layer and a second metal layer provided in a laminated manner, at least one first region and at least one second region are included between the first metal layer and the second metal layer, and the first region and the second region are alternately arranged in a first direction; the first region is provided with a polymer layer, and the polymer layer is respectively bonded to the first metal layer and the second metal layer through adhesive layers. In the present application, a surface of the first metal layer and a surface of the second metal layer, which are corresponding to the second region, are used for realizing the welding with tabs or other current collector, and since the second region does not comprise a polymer layer, not only the welding operability is high, but also a phenomenon that the welding joint impedance is increased due to the insulation of the polymer is avoided. Therefore, the current collector of the present application not only has a high welding yield, effectively saving the production cost of the lithium ion battery, but also can reduce the internal resistance of the lithium ion battery, significantly improving cycle performance and the safety performance of the lithium ion battery.

The electrode plate of the present application includes the current collector described above, and thus the electrode plate can realize a high-strength welding of the tabs, and guarantee the normal output of the current of the lithium ion battery; in addition, the electrode plate has a relative low internal resistance, which can realize the effective transmission of ions inside the battery.

The lithium ion battery of the present application includes the electrode plate described above, and thus has excellent cycle performance and safety performance.

### BRIEF DESCRIPTION OF DRAWINGS

FIG. 1a is a structural schematic view of Example 1 of a current collector of the present application.
FIG. 1b is a cross-sectional view of the current collector of FIG. 1a along a first direction.
FIG. 2a is a structural schematic view of Example 2 of the current collector of the present application.
FIG. 2b is a cross-sectional view of the current collector of FIG. 2a along a first direction.
FIG. 3a is a structural schematic view of Example 3 of the current collector of the present application.
FIG. 3b is a cross-sectional view of the current collector of FIG. 3a along a first direction.
FIG. 4a is a structural schematic view of Example 4 of the current collector of the present application.
FIG. 4b is a cross-sectional view of the current collector of FIG. 4a along a first direction.
FIG. 5a is a structural schematic view of Example 5 of the current collector of the present application.
FIG. 5b is a cross-sectional view of the current collector of FIG. 5a along a first direction.
FIG. 6a is a structural schematic view of the current collector Example 6 of the present application.
FIG. 6b is a cross-sectional view of the current collector of FIG. 6a along a first direction.
FIG. 7a is a structural schematic view of Example 7 of the current collector of the present application.
FIG. 7b is a cross-sectional view of the current collector of FIG. 7a along a first direction.
FIG. 8a is a structural schematic view of a current collector of a comparative example of the present application.
FIG. 8b is a cross-sectional view of the current collector of FIG. 8a along a first direction.

### DESCRIPTION OF EMBODIMENTS

In order to make the purpose, the technical solution and advantages of the present application more clear, the technical solutions of examples of the present application will be described clearly and completely below in combination with the examples of the present application, and obviously, the described examples are some of examples, but not all of the examples. Based on the examples in the present application, all other examples obtained by those of ordinary skill in the art without creative work belong to the scope of protection of the present application.

In the present application, a first direction indicates an extension direction of a current collector (an unrolling direction of a current collector roll) or a direction perpendicular to the extension direction on the paper.

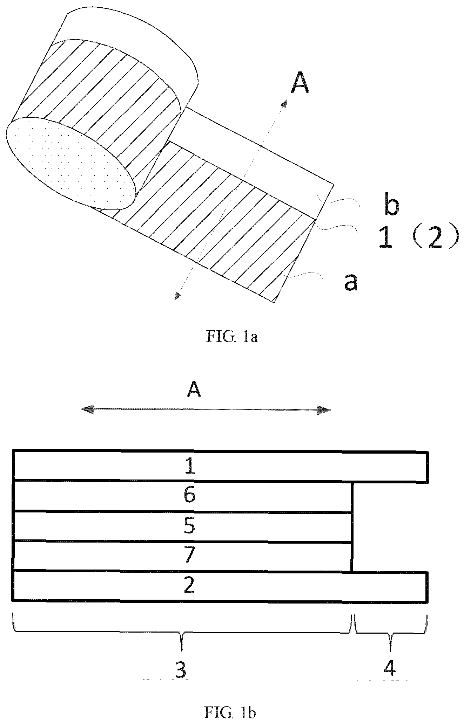

FIG. 1a is a structural schematic view of Example 1 of a current collector of the present application, and FIG. 1b is a cross-sectional view of the current collector of FIG. 1a along a first direction. As shown in FIG. 1a and FIG. 1b, the current collector of the present example includes a first metal layer 1 and a second metal layer 2 which are provided in a laminated manner, at least one first region 3 and at least one second region 4 are included between the first metal layer 1 and the second metal layer 2, the first region 3 and the second region 4 are alternately arranged in a first direction A; a polymer layer 5 is provided in the first region 3, and the polymer layer 5 is respectively bonded to the first metal layer 1 and the second metal layer 2 through adhesive layers. In the present application, the term "alternately arranged" refers to that at least one first region 3 and at least one second region 4 are sequentially arranged in the first direction A.

The adhesive layer between the polymer layer 5 and the first metal layer 1 may be referred as a first adhesive layer 6, the adhesive layer between the polymer layer 5 and the second metal layer 2 may be referred as a second adhesive layer 7.

In order to facilitate continuous production, the current collector is usually wound into a roll, and FIG. 1a is a partially unrolled current collector roll. The current collector of example 1 of the present application includes the first metal layer 1 and the second metal layer 2 which are provided in a laminated manner, and in the first direction A (a direction perpendicular to the extension direction of the current collector), one first region 3 and one second region 4 are included between the first metal layer 1 and the second metal layer 2. The polymer layer 5 is provided in the first region 3, and upper and lower surfaces of the polymer layer 5 are bonded to the first metal layer 1 and the second metal layer 2 through a first adhesive layer 6 and a second adhesive layer 7, respectively, and no function layer is provided in the second region 4. Where the polymer layer 5, the first adhesive layer 6 and the second adhesive layer 7 fill the entire first region 3.

In the current collector of the present example, surfaces of the first metal layer 1 and the second metal layer 2, corresponding to orthographic projections of the first region 3 on the first metal layer 1 and the second metal layer 2, are non-welding regions a of the current collector, and surfaces of the first metal layer 1 and the second metal layer 2, corresponding to orthographic projections of the second region 4 on the first metal layer 1 and the second metal layer 2, are welding regions b of the current collector, where the welding regions b are used for welding tabs or other current collectors, and the non-welding regions a are used for coating electrode active layers.

The current collector of the present application is not limited to those shown in FIG. 1a and FIG. 1b, and may be also shown in below figures.

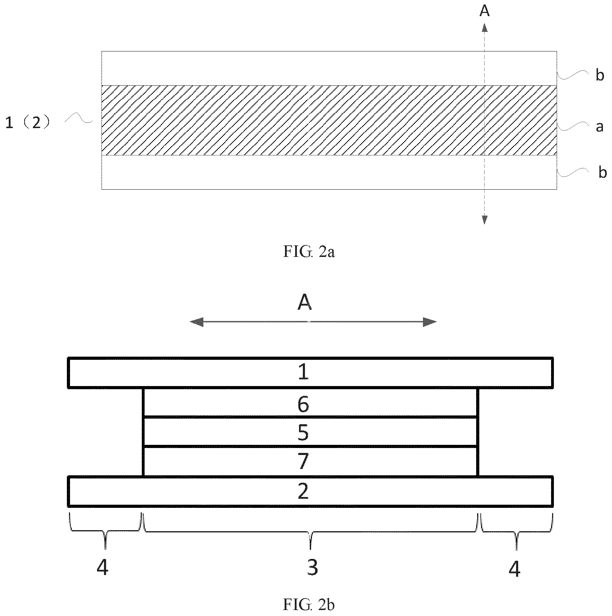

FIG. 2a is a structural schematic view of Example 2 of the current collector of the present application, FIG. 2b is a cross-sectional view of the current collector of FIG. 2a along a first direction, and FIG. 2a is a schematic view of the current collector after the current collector roll is unrolled. As shown in FIG. 2a and FIG. 2b, the current collector of the present example includes a first metal layer 1 and a second metal layer 2 which are provided in a laminated manner, and in a first direction A (a direction perpendicular to an extension direction of the current collector), one first region 3 and two second regions 4 are included between the first metal layer 1 and the second metal layer 2, and are arranged according to an order of second region 4, first region 3, second region 4 in the first direction A. A polymer layer 5 is provided in the first region 3, and upper and lower surfaces of the polymer layer 5 are bonded to the first metal layer 1 and the second metal layer 2 through a first adhesive layer 6 and a second adhesive layer 7, respectively, and no function layer is provided in the second regions 4. Where the polymer layer 5, the first adhesive layer 6 and the second adhesive layer 7 fill the entire first region 3.

In the current collector of the present example, surfaces of the first metal layer 1 and the second metal layer 2, corresponding to orthographic projections of the first region 3 on the first metal layer 1 and the second metal layer 2, are non-welding regions a of the current collector, and surfaces of the first metal layer 1 and the second metal layer 2, corresponding to orthographic projections of the second regions 4 on the first metal layer 1 and the second metal layer 2, are welding regions b of the current collector.

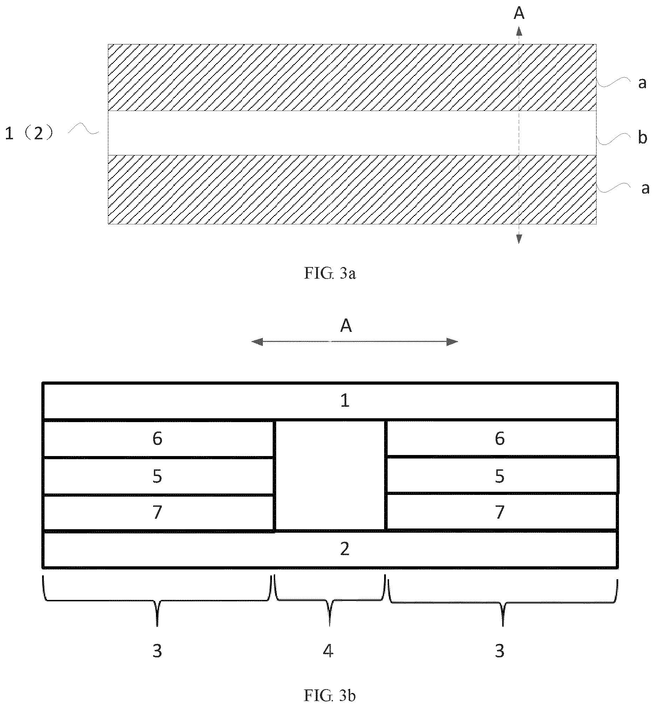

FIG. 3a is a structural schematic view of Example 3 of the current collector of the present application, and FIG. 3b is a cross-sectional view of the current collector of FIG. 3a along a first direction, and FIG. 3a is a schematic view of the current collector after the current collector roll is unrolled. As shown in FIG. 3a and FIG. 3b, the current collector of the present example includes a first metal layer 1 and a second metal layer 2 which are provided in a laminated manner, and in a first direction A (a direction perpendicular to an extension direction of the current collector), two first regions 3 and one second region 4 are included between the first metal layer 1 and the second metal layer 2, and are arranged according to an order of first region 3, second region 4, first region 3 in the first direction A. A polymer layer 5 is provided in the first region 3, and upper and lower surfaces of the polymer layer 5 are bonded to the first metal layer 1 and the second metal layer 2 through a first adhesive layer 6 and a second adhesive layer 7, respectively, and no function layer is provided in the second region 4. Where the polymer layer 5, the first adhesive layer 6 and the second adhesive layer 7 fill the entire first regions 3.

In the current collector of the present example, surfaces of the first metal layer 1 and the second metal layer 2, corresponding to orthographic projections of the first regions 3 on the first metal layer 1 and the second metal layer 2, are non-welding regions a of the current collector, and surfaces of the first metal layer 1 and the second metal layer 2, corresponding to orthographic projections of the second region 4 on the first metal layer 1 and the second metal layer 2, are welding regions b of the current collector.

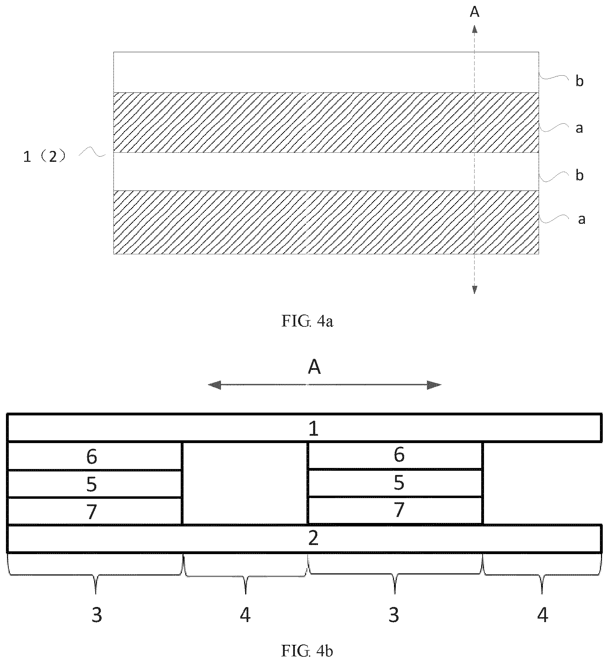

FIG. 4a is a structural schematic view of Example 4 of the current collector of the present application, FIG. 4b is a cross-sectional view of the current collector of FIG. 4a along a first direction, and FIG. 4a is a schematic view of the current collector after the current collector roll is unrolled. As shown in FIG. 4a and FIG. 4b, the current collector of the present example includes a first metal layer 1 and a second metal layer 2 which are provided in a laminated manner, and in a first direction A (a direction perpendicular to an extension direction of the current collector), two first regions 3 and two second regions 4 are included between the first metal layer 1 and the second metal layer 2, and are arranged according to an order of first region 3, second region 4, first region 3, second region 4 in the first direction A. A polymer layer 5 is provided in the first regions 3, and upper and lower surfaces of the polymer layer 5 are bonded to the first metal layer 1 and the second metal layer 2 through a first adhesive layer 6 and a second adhesive layer 7, respectively, and no function layer is provided in the second regions 4. Where the polymer layer 5, the first adhesive layer 6 and the second adhesive layer 7 fill the entire first regions 3.

In the current collector of the present example, surfaces of the first metal layer 1 and the second metal layer 2, corresponding to orthographic projections of the first regions 3 on the first metal layer 1 and the second metal layer 2, are non-welding regions a of the current collector, and surfaces of the first metal layer 1 and the second metal layer 2, corresponding to orthographic projections of the second regions 4 on the first metal layer 1 and the second metal layer 2, are welding regions b of the current collector.

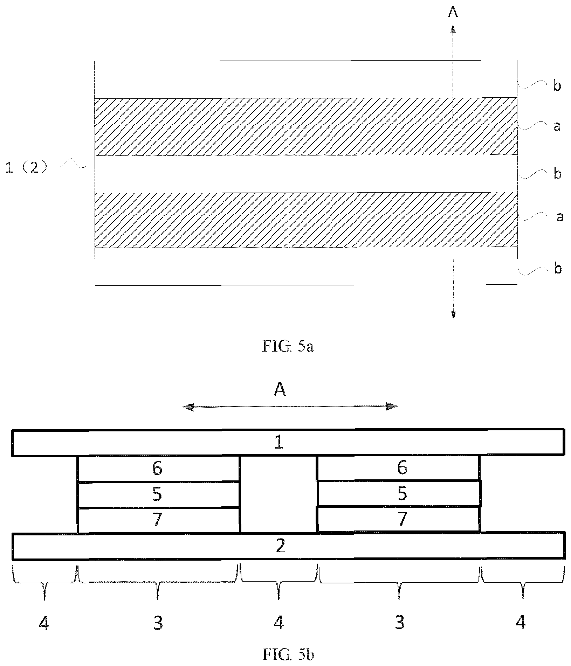

FIG. 5a is a structural schematic view of Example 5 of the current collector of the present application, FIG. 5b is a cross-sectional view of the current collector of FIG. 5a along a first direction, and FIG. 5a is a schematic view of the current collector after the current collector roll is unrolled. As shown in FIG. 5a and FIG. 5b, the current collector of the present example includes a first metal layer 1 and a second metal layer 2 which are provided in a laminated manner, and in a first direction A (a direction perpendicular to an extension direction of the current collector), two first regions 3 and three second regions 4 are included between the first metal layer 1 and the second metal layer 2, and are arranged according to an order of second region 4, first region 3, second region 4, first region 3, second region 4 in the first direction A. A polymer layer 5 is provided in the first regions 3, and upper and lower surfaces of the polymer layer 5 are bonded to the first metal layer 1 and the second metal layer 2 through a first adhesive layer 6 and a second adhesive layer 7, respectively, and no function layer is provided in the second regions 4. Where the polymer layer 5, the first adhesive layer 6 and the second adhesive layer 7 fill the entire first regions 3.

In the current collector of the present example, surfaces of the first metal layer 1 and the second metal layer 2, corresponding to orthographic projections of the first regions 3 on the first metal layer 1 and the second metal layer 2, are non-welding regions a of the current collector, and surfaces of the first metal layer 1 and the second metal layer 2, corresponding to orthographic projections of the second regions 4 on the first metal layer 1 and the second metal layer 2, are welding regions b of the current collector.

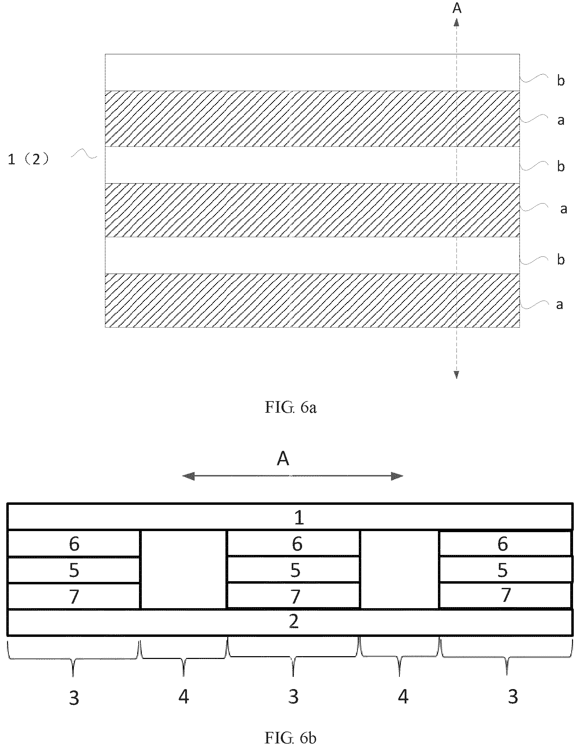

FIG. 6a is a structural schematic view of Example 6 of the current collector of the present application, FIG. 6b is a cross-sectional view of the current collector of FIG. 6a along a first direction, and FIG. 6a is a schematic view of the current collector after the current collector roll is unrolled. As shown in FIG. 6a and FIG. 6b, the current collector of the present example includes a first metal layer 1 and a second metal layer 2 which are provided in a laminated manner, and in a first direction A (a direction perpendicular to an extension direction of the current collector), three first regions 3 and two second regions 4 are included between the first metal layer 1 and the second metal layer 2, and are arranged according to an order of first region 3, second region 4, first region 3, second region 4, first region 3 in the first direction A. A polymer layer 5 is provided in the first region 3, and upper and lower surfaces of the polymer layer 5 are bonded to the first metal layer 1 and the second metal layer 2 through a first adhesive layer 6 and a second adhesive layer 7, respectively, and no function layer is provided in the second regions 4. Where the polymer layer 5, the first adhesive layer 6 and the second adhesive layer 7 fill the entire first regions 3.

In the current collector of the present example, surfaces of the first metal layer 1 and the second metal layer 2, corresponding to orthographic projections of the first regions 3 on the first metal layer 1 and the second metal layer 2, are non-welding regions a of the current collector, and surfaces of the first metal layer 1 and the second metal layer 2, corresponding to orthographic projections of the second regions 4 on the first metal layer 1 and the second metal layer 2, are welding regions b of the current collector.

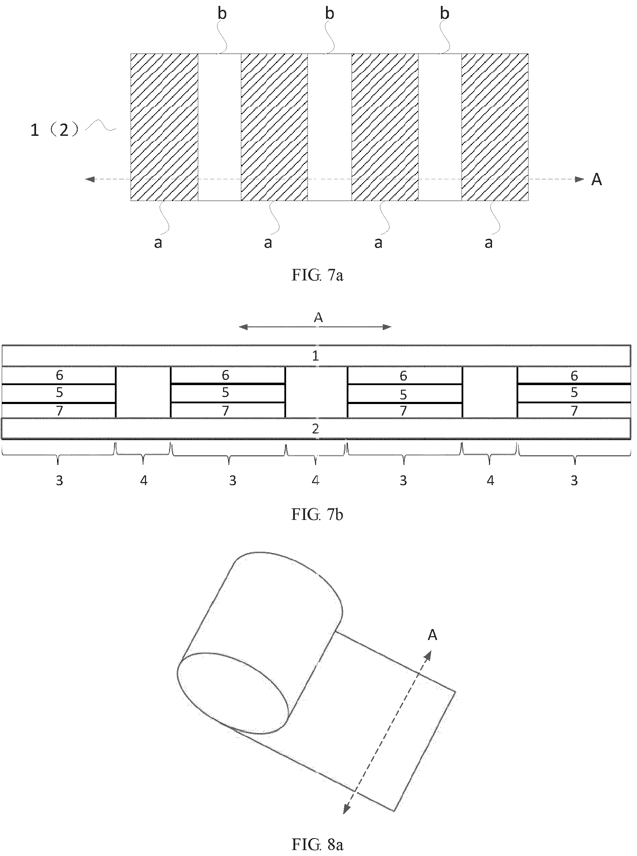

FIG. 7a is a structural schematic view of Example 7 of the current collector of the present application, FIG. 7b is a cross-sectional view of the current collector of FIG. 7a along a first direction, and FIG. 7a is a schematic view of the current collector after the current collector roll is unrolled. As shown in FIG. 7a and FIG. 7b, the current collector of the present example includes a first metal layer 1 and a second metal layer 2 which are provided in a laminated manner, and in a first direction A (an extension direction of the current collector), N first regions 3 and M second regions 4 (N≥1, M≥1) are included between the first metal layer 1 and the second metal layer 2, and are alternately arranged according to an order of first region 3, second region 4 in the first direction A. A polymer layer 5 is provided in the first regions 3, and upper and lower surfaces of the polymer layer 5 are bonded to the first metal layer 1 and the second metal layer 2 through a first adhesive layer 6 and a second adhesive layer 7, respectively, and no function layer is provided in the second regions 4. Where the polymer layer 5, the first adhesive layer 6 and the second adhesive layer 7 fill the entire first regions 3.

In the current collector of the present example, surfaces of the first metal layer 1 and the second metal layer 2, corresponding to orthographic projections of the first regions 3 on the first metal layer 1 and the second metal layer 2, are non-welding regions a of the current collector, and surfaces of the first metal layer 1 and the second metal layer 2, corresponding to orthographic projections of the second regions 4 on the first metal layer 1 and the second metal layer 2, are welding regions b of the current collector.

In the plurality of examples described above, when the number of the first regions 3 and the number of the second regions 4 are greater than 1, sizes of the first regions 3 may be the same or different, and sizes of the second regions 4 may be the same or different. A specific size can be determined according to needs.

In an application process, respective current collectors shown in the above examples can be tailored according to an actual need, thereby obtaining current collectors that meet the needs.

According to the technical solutions provided by the present application, when the current collector of the present application is used for welding of tabs or other current collectors, the welding strength is significantly improved, and after an electrode plate including the current collector is applied to a lithium ion battery, an internal resistance of the lithium ion battery can be effectively reduced, which not only prolongs the cycle life of the lithium ion battery, but also reduces the temperature rise of the lithium ion battery caused by repeated charging and discharging and improves the safety performance of the lithium ion battery. Based on the analysis on this phenomenon, the inventor believes that it may be lie in that in the present application, there is no any functional layer between the welding region on the surface of the first metal layer 1 and the welding region on the surface of the second metal layer 2, and there is only the welding between the first metal layer, the welding object (the tab or other current collector) and the second metal layer, and thus the welding interference is low, such that the metals in the welding zone contact more sufficiently, and then the welding strength is improved. In addition, since there is no other welding interference, the ohmic resistance of the solder joints will not increase, which is beneficial to the reduction of the internal resistance of the lithium ion battery, and thus the electrical performance of the lithium-ion battery is further improved.

In the current collector of the present application, a thickness of the first metal layer 1 and/or the second metal layer 2 is 0.1-5µm, preferably 0.5-2µm.

In the current collector of the present application, a thickness of the polymer layer 5 is 1-15µm, preferably 3-10µm.

In the current collector of the present application, a thickness of the adhesive layer is 0.01-3µm, preferably 0.1-1µm.

Further, the current collector of the present application can be specifically used as a negative current collector or a positive current collector through the selection of materials of the first metal layer 1 and the second metal layer 2. Where when the first metal layer 1 and the second metal layer 2 are independently selected from one of copper, nickel, titanium, silver, stainless steel, and nickel-copper alloy, it is a negative current collector; and when the first metal layer 1 and the second metal layer 2 are independently selected from one of aluminum, stainless steel, and aluminum-zirconium alloy, it is a positive current collector. As a preferred embodiment, in the negative current collector, copper can be selected as the first metal layer 1 and the second metal layer 2, and in the positive current collector, aluminum can be selected as the first metal layer 1 and the second metal layer 2.

In addition, a material of the polymer layer 5 may be selected from at least one of polyterephthalate, polyamide, polyimide, polyethylene, polypropylene, polystyrene, polyvinyl chloride, polyethylene terephthalate, polybutylene terephthalate, poly(p-phenylene terephthamide), ethylene propylene rubber, acrylonitrile-butadiene-styrene copolymer, polyvinyl formal, polyvinyl butyral, polyurethane, polyacrylonitrile, polyvinyl acetate, polyoxymethylene, phenolic resin, epoxy resin, polytetrafluoroethylene, polyvinylidene fluoride, silicone rubber, polycarbonate, polysulfone, polyethersulfone and polyphenylene ether.

A material of the adhesive layer may be selected from at least one of a polyurethane binder, a polyacrylic resin binder, a polyvinyl acetate binder, an urea-formaldehyde resin binder, an epoxy resin binder and a coupling agent. Where the coupling agent is selected from at least one of a silane coupling agent, a titanate ester coupling agent, a zirconium-based coupling agent, an aluminate ester-based coupling agent and a borate ester coupling agent.

Since the surfaces of the first metal layer 1 and the second metal layer 2 are divided into the welding region b and the non-welding region a, and the non-welding region a is used for coating with an electrode active layer, in order to ensure the electrical performance of the electrode plate, in the first direction A, a length of the first region 3 is controlled to be greater than or equal to a length of the second region 4, and preferably, the length of the first region 3 is greater than the length of the second region 4, so that the surface of the current collector is coated with an electrode active layer with a greater area. Specifically, the sizes of the first region 3 and the second region 4 may be determined according to actual needs.

A preparation method of the current collector of the present application is simple and easy to operate. Before preparation, a first foil for the first metal layer 1 and a second foil for the second metal layer 2 may be pretreated, to remove oxide on surfaces of the first foil and the second foil, thereby contributing to reduce the resistance and ensuring the efficient conduction of current.

A method for pretreatment includes: the first foil and the second foil are respectively acid washed with 0.001-0.5g/L of an acid solution for generally 0.5-5 min; and then the first foil and the second foil are respectively alkaline washed with 0.001-0.5g/L of an alkaline solution for 0.5-5 min. After the alkaline washing is finished, the first foil and the second foil are washed with deionized water for 1-30min, and finally the first foil and the second foil are respectively washed with an organic solvent (for example acetone, absolute ethanol, dimethyl carbonate, ethyl acetate, methyl acetate) for 1-30min, and are air dried.

After pretreatment, the following two ways may be adopted to complete the preparation of the current collector.

In an embodiment, by controlling a region to be coated, the first adhesive layer 6, the polymer layer 5 and the second adhesive layer 7 are sequentially coated on a surface of the first foil corresponding to the first region 3 by using a coater and an extrusion casting laminator. Subsequently, the second foil is covered on the second adhesive layer 7 and closely combined with the second adhesive layer 7 to obtain the current collector of the present application.

In another example, by controlling a region to be coated, the first adhesive layer 6 and the polymer layer 5 are sequentially coated on a surface of the first foil corresponding to the first region 3 by using a coater and an extrusion casting laminator. Subsequently, by controlling a region to be coated, the second adhesive layer 7 is coated on a surface of the second foil corresponding to the first region 3 by using a coater and an extrusion casting laminator. Finally, the first foil and the second foil are closely combined to bond the polymer layer 5 and the second adhesive layer 7 to obtain the current collector of the present application.

The present application further provides an electrode plate, and the electrode plate includes the current collector described above.

The electrode plate of the present application may be a positive electrode plate including the current collector described above, and may also be a negative electrode plate including the current collector described above.

When the first metal layer and the second metal layer are independently selected from one of aluminum, stainless steel, and aluminum-zirconium alloy, the current collector is a positive current collector, after a positive slurry containing a positive active material is coated on the non-welding region of the first metal layer and the second metal layer of the positive current collector and the solvent is evaporated, the positive electrode plate is obtained by rolling and slitting.

Where the positive slurry is a mixed system including the positive active material, a conductive agent, a binder and a solvent. The present application does no limit the selection of the positive active material, which may be at least one of LiCoO₂, LiFePO₄, LiNi_{0.3}Co_{0.3}Mn_{0.3}O₂, LiNi_{0.5}Co_{0.3}Mn_{0.2}O₂, LiNi_{0.6}Co_{0.2}Mn_{0.2}O₂, LiNi_{0.8}Co_{0.1}Mn_{0.1}O₂, LiNi_{0.8}Co_{0.15}Al_{0.05}O₂ and LiNi_{0.5}Mn_{1.5}O₄; the conductive agent is selected from at least one of acetylene black (AB), conductive carbon black (Super-P), ketjen black (KB), carbon nano tube (CNT) and graphene; the binder is selected from at least one of polyvinylidene fluoride (PVDF), sodium carboxymethyl cellulose (CMC) and sodium alginate (SA); and the solvent is selected from at least one of N-methylpyrrolidone (NMP), N,N-dimethylformamide (DMF), N,N-dimethylacetamide (DMAc), acetonitrile, tetrahydrofuran, toluene and xylene.

When the first metal layer 1 and the second metal layer 2 are independently selected from one of copper, nickel, titanium, silver, stainless steel, and nickel-copper alloy, the current collector is a negative current collector, and after a negative slurry containing a negative active material is coated on the non-welding region of the first metal layer and the second metal layer of the negative current collector and the solvent is evaporated, the negative electrode plate is obtained by rolling and slitting.

Where the negative slurry is a mixed system including the negative active material, a conductive agent, a binder and deionized water. The present application does not limit the selection of the negative active material, which may be a graphite negative material, or a mixture of a silicon monoxide negative material and a graphite negative material in any ratio, and may also adopt, of course, a silicon monoxide negative material, other types of silicon-based negative materials, a graphite negative material, a hard carbon negative material, a soft carbon anode material, a tin-based negative material and their mixture in any ratio. The material of the negative current collector may be at least one of a copper foil, a nickel foam and a copper foam. The conductive agent may be selected from at least one of natural graphite, artificial graphite, carbon black, acetylene black, ketjen black, carbon fiber and graphene. The binder may be selected from at least one of carboxymethyl cellulose, styrene butadiene rubber, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, polyamide-imide, polyvinyl alcohol, and sodium polyacrylate.

Since the electrode plate of the present application includes the aforementioned the current collector, when welding the tabs or other current collector, the welding yield is high, and the welding joint has the characteristic of low impedance, so it is beneficial to the efficient transmission of lithium ions, thereby improving the electrical performance of the lithium ion battery.

The present application further provides a lithium ion battery, and the lithium ion battery includes the electrode plates described above. Specifically, the positive electrode plate and/or the negative electrode plate described above may be included.

It can be understood that, in addition to the positive electrode plate and the negative electrode plate, the lithium ion battery of the present application includes an electrolyte and a diaphragm, where the diaphragm is interposed between the positive electrode plate and the negative electrode plate, and the electrolyte is filled between the positive electrode plate and the negative electrode plate.

The present application does not strictly limit the selection of the electrolyte, and may include one or more of the solvents commonly used in the electrolytes of the current lithium batteries, and the electrolyte lithium salts commonly used in the current lithium ion electrolytes. For example, the solvent may be ethylene carbonate, propylene carbonate, butylene carbonate, fluoroethylene carbonate (FEC), dimethyl carbonate (DMC), diethyl carbonate (DEC), difluoroethylene carbonate (DFEC), dipropyl carbonate, ethyl methyl carbonate (EMC), ethyl acetate, ethyl propionate, propyl acetate, propyl propionate, sulfolane, γ-butyrolactone and so on; and the lithium salt for example may be selected from one or more of lithium hexafluorophosphate (LiPF₆), lithium bis(fluorosulfonyl)imide (LiFSI), and lithium bis(trifluoromethanesulfonyl)imide (LiTFSI).

The present application does not strictly limit the selection of the material of the diaphragm, it may be diaphragm materials commonly used in the current lithium batteries, for example, one of a polypropylene (PP) diaphragm, a polyethylene (PE) diaphragm, a polypropylene/polyethylene (PP/PE) double-layer composite film, a polyimide (PI) electrospinning diaphragm, a polypropylene/polyethylene/polypropylene (PP/PE/PP) three-layer composite film, a cellulose non-woven diaphragm and a diaphragm with ceramic coating.

In the preparation of the lithium ion battery, the positive electrode plate, the diaphragm and the negative electrode plate are wound or laminated to obtain a bare cell, and the bare cell is encapsulated in a pre-stamped aluminum molded film bag. After the encapsulated battery is dried at 85 °C for removing moisture, the electrolyte is injected into the dried battery, and then the battery is shelved, formed and secondary sealed to complete the preparation of the lithium battery.

Since the lithium ion battery of the present application includes the electrode plate described above, the internal resistance of the lithium ion battery is relatively low, which can not only realize the efficient transmission of lithium ions and thus improve the cycle performance of the lithium ion battery, but also make temperature rise phenomenon not obvious during the repeated charge and discharge process, thereby ensuring high safety performance of the lithium ion battery.

Hereinafter, the current collector of the present application is described in detail through specific examples. Unless otherwise specified, chemical materials and instruments used in the following examples and comparative examples are conventional chemical materials and conventional instruments, all of which are commercially available.

### Example 1

The current collector of the present example is prepared by the following method:
Two rolls of metal foils (aluminum foils with a thickness of 2 µm) were taken, and the two rolls of metal foils were each washed with 0.001 g/L of phosphoric acid solution for 5 min, and then washed with 0.001 g/L of sodium hydroxide solution for 5 min, and then washed with deionized water for 1 min, and finally washed with dimethyl carbonate for 1 min and air dried.

One roll of the pre-processed metal foils was taken, and by controlling a region to be coated, a first adhesive layer 6 (a polyurethane binder with a thickness of 0.1µm, from Wuxi Boai Adhesive Factory) was coated on a surface of the metal foil corresponding to a first region 3 (the first region 3 and a second region 4 are arranged along a direction perpendicular to an extension direction of the metal foil) using a coater, a polymer layer 5 (PET with a thickness of 10 µm) was laminated on a surface of the first adhesive layer 6 by an extrusion casting laminator (extrusion temperature of the equipment is set as 284 °C), and a second adhesive layer 7 (a polyurethane binder with a thickness of 0.1 µm, from Wuxi Boai Adhesive Factory) was coated on a surface of the polymer layer 5 using the coater. Finally, the two rolls of metal foils were attached, to obtain a current collector C1 as shown in FIG. 1a and FIG. 1b. Where the welding region b has a width of 100 mm, and the non-welding region a has a width of 400 mm.

### Comparative example 1

A preparation method of a current collector C1a of the present comparative example is substantially the same as Example 1, except that the polymer layer is provided in all the regions between the first metal layer and the second metal layer through the first adhesive layer and the second adhesive layer.

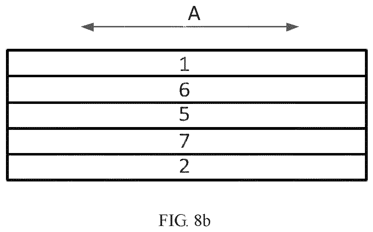

FIG. 8a is a structural schematic view of the current collector of the comparative example of the present application, and FIG. 8b is a cross-sectional view of the current collector of FIG. 8a along a first direction. FIG. 8a is a partially unrolled current collector roll. As shown in FIG. 8a and FIG. 8b, the current collector of this comparative example includes a first metal layer 1, a first adhesive layer 6, a polymer layer 5, a second adhesive layer 7, and a second metal layer 2, which are sequentially laminated from top to bottom, and the first metal layer 1, the first adhesive layer 6, the polymer layer 5, the second adhesive layer 7, and the second metal layer 2 have the same size.

### Example 2

The current collector of the present example is prepared by the following method:
Two rolls of metal foils (aluminum foils with a thickness of 3 µm) were taken, and the two rolls of metal foil were each washed with 0.5 g/L of phosphoric acid solution for 0.5 min, and then washed with 0.5 g/L of sodium hydroxide solution for 0.5 min, and then washed with deionized water for 30 min, and finally washed with acetone for 30 min and air dried.

One roll of the pre-processed metal foils was taken, by controlling a region to be coated, a first adhesive layer (a polyurethane binder with a thickness of 1 µm, from Wuxi Boai Adhesive Factory) was coated on a surface of the metal foil corresponding to a first region (the first region and a second region are arranged along a direction perpendicular to an extension direction of the metal foil) using a coater, a polymer layer (PET with a thickness of 3 µm) was laminated on a surface of the first adhesive layer by an extrusion casting laminator (extrusion temperature of the equipment is set as 284 °C), and a second adhesive layer (a polyurethane binder with a thickness of 1 µm, from Wuxi Boai Adhesive Factory) was coated on a surface of the polymer layer using the coater. Finally, the two rolls of metal foils are attached, to obtain the current collector C2 as shown in FIG. 2a and FIG. 2b. Where the welding region has a width of 100 mm, and the non-welding region has a width of 300 mm.

### Comparative example 2

A preparation method of a current collector C2a of the present comparative example is substantially the same as Example 2, except that the polymer layer is provided in all the regions between the first metal layer and the second metal layer through the first adhesive layer and the second adhesive layer. A specific structure is as shown in FIG. 8a and FIG. 8b.

### Example 3

The current collector of the present example is prepared by the following method:
Two rolls of metal foils (aluminum foils with a thickness of 1 µm) were taken, and the two rolls of metal foils were each washed with 0.1 g/L of phosphoric acid solution for 1 min, and then washed with 0.1 g/L of sodium hydroxide solution for 1 min, and then washed with deionized water for 10 min, and finally washed with absolute ethanol for 10 min and air dried.

One roll of the pre-processed metal foils was taken, and by controlling a region to be coated, a first adhesive layer (a polyacrylic resin binder with a thickness of 0.5 µm, from Wuxi Boai Adhesive Factory) was coated on a surface of the metal foil corresponding to a first region (the first region and a second region are arranged along a direction perpendicular to an extension direction of the metal foil) using a coater, a polymer layer (PET with a thickness of 5 µm) was laminated on a surface of the first adhesive layer by an extrusion casting laminator (extrusion temperature of the equipment is set as 284 °C), and a second adhesive layer (a polyurethane binder with a thickness of 0.5 µm, from Wuxi Boai Adhesive Factory) was coated on a surface of the polymer layer using the coater. Finally, the two rolls of metal foils were attached, to obtain a current collector C3 as shown in FIG. 3a and FIG. 3b. Where the welding region has a width of 100 mm, and the non-welding region has a width of 200 mm.

### Comparative example 3

A preparation method of a current collector C3a of the present comparative example is substantially the same as Example 3, except that the polymer layer is provided in all the regions between the first metal layer and the second metal layer through the first adhesive layer and the second adhesive layer. A specific structure is as shown in FIG. 8a and FIG. 8b.

### Example 4

The current collector of the present example is prepared by the following method:
Two rolls of metal foils (aluminum foils with a thickness of 0.5 µm) were taken, and the two rolls of metal foils were each washed with 0.01 g/L of sulfuric acid solution for 2 min, and then washed with 0.01 g/L of potassium hydroxide solution for 2 min, and then washed with deionized water for 15 min, and finally washed with acetone for 15 min and air dried.

One roll of the pre-processed metal foils was taken, and by controlling a region to be coated, a first adhesive layer (silane coupling agent KH570 with a thickness of 0.01 µm, from Shandong Yuanhe New Material Technology Share Holding Co., Ltd) was coated on a surface of the metal foil corresponding to a first region (the first region and a second region are arranged along a direction perpendicular to an extension direction of the metal foil) using a coater, a polymer layer (PET with a thickness of 5 µm) was laminated on a surface of the first adhesive layer by an extrusion casting laminator (extrusion temperature of the equipment is set as 284 °C), and a second adhesive layer (silane coupling agent KH570 with a thickness of 0.01 µm, from Shandong Yuanhe New Material Technology Share Holding Co., Ltd) was coated on a surface of the polymer layer using the coater. Finally, the two rolls of metal foil were attached, to obtain a current collector C4 as shown in FIG. 4a and FIG. 4b. Where the welding region has a width of 125 mm, the non-welding region has a width of 125 mm.

### Comparative example 4

A preparation method of a current collector C4a of the present comparative example is substantially the same as Example 4, except that the polymer layer is provided in all the regions between the first metal layer and the second metal layer through the first adhesive layer and the second adhesive layer. A specific structure is as shown in FIG. 8a and FIG. 8b.

### Example 5

The current collector of the present example is prepared by the following method:
Two rolls of metal foils (aluminum foils with a thickness of 1.5 µm) were taken, and the two rolls of metal foils were each washed with 0.02 g/L of sulfuric acid solution for 2 min, and then washed with 0.02 g/L of potassium hydroxide solution for 2 min, and then washed with deionized water for 20 min, and finally washed with acetone for 20 min and air dried.

One roll of the pre-processed metal foils was taken, and by controlling a region to be coated, a first adhesive layer (silane coupling agent KH570 with a thickness of 0.03 µm, from Shandong Yuanhe New Material Technology Share Holding Co., Ltd) was coated on a surface of the metal foil corresponding to a first region (the first region and a second region are arranged along a direction perpendicular to an extension direction of the metal foil) using a coater, a polymer layer (PP with a thickness of 4 µm) was laminated on a surface of the first adhesive layer by an extrusion casting laminator (extrusion temperature of the equipment is set as 220 °C); and the other roll of the metal foils was taken, and by controlling a region to be coated, a second adhesive layer (silane coupling agent KH570 with a thickness of 0.03 µm, from Shandong Yuanhe New Material Technology Share Holding Co., Ltd) was coated on a surface of the metal foil corresponding to the first region using the coater. Finally, the two rolls of metal foils were attached, to obtain a current collector C5 as shown in FIG. 5a and FIG. 5b. Where the welding region has a width of 100 mm, and the non-welding region has a width of 100 mm.

### Comparative example 5

A preparation method of a current collector C5a of the present comparative example is substantially the same as Example 5, except that the polymer layer is provided in all the regions between the first metal layer and the second metal layer through the first adhesive layer and the second adhesive layer. A specific structure is as shown in FIG. 8a and FIG. 8b.

### Example 6

The current collector of the present example is prepared by the following method:
Two rolls of metal foils (aluminum foils with a thickness of 1.5 µm) were taken, and the two rolls of metal foils were each washed with 0.2 g/L of sulfuric acid solution for 1 min, and then washed with 0.2 g/L of sodium hydroxide solution for 1 min, and then washed with deionized water for 25 min, and finally washed with acetone for 25 min and air dried.

One roll of the pre-processed metal foils was taken, and by controlling a region to be coated, a first adhesive layer (urea-formaldehyde resin binder with a thickness of 0.3 µm, from Dongguan Suyu Chemical Co., Ltd) was coated on a surface of the metal foil corresponding to a first region (the first region and a second region are arranged along a direction perpendicular to an extension direction of the metal foil) using a coater, a polymer layer (PP with a thickness of 5 µm) was laminated on a surface of the first adhesive layer by an extrusion casting laminator (extrusion temperature of the equipment is set as 220 °C). The other roll of the metal foils was taken, and by controlling a region to be coated, a second adhesive layer (epoxy resin binder with a thickness of 0.3 µm, from Dongguan Suyu Chemical Co., Ltd) was coated on a surface of the metal foil corresponding to the first region using the coater. Finally, the two rolls of metal foils were attached such that the polymer layer and the second adhesive layer were bonded, to obtain a current collector C6 as shown in FIG. 6a and FIG. 6b. Where the welding region has a width of 100 mm, and the non-welding region has a width of 100 mm.

### Comparative example 6

A preparation method of a current collector C6a of the present comparative example is substantially the same as Example 6, except that the polymer layer is provided in all the regions between the first metal layer and the second metal layer through the first adhesive layer and the second adhesive layer. A specific structure is as shown in FIG. 8a and FIG. 8b.

### Example 7

The current collector of the present example is prepared by the following method:
Two rolls of metal foils (aluminum foils with a thickness of 1 µm) were taken, and the two rolls of metal foils were each washed with 0.1 g/L of sulfuric acid solution for 1 min, and then washed with 0.05 g/L of sodium hydroxide solution for 1 min, and then washed with deionized water for 20 min, and finally washed with acetone for 25 min and air dried.

One roll of the pre-processed metal foils was taken, and by controlling a region to be coated, a first adhesive layer (aluminate ester coupling agent with a thickness of 0.08 µm, from Shandong Yuanhe New Material Technology Share Holding Co., Ltd) was coated on a surface of the metal foil corresponding to a first region (the first region and a second region are arranged along an extension direction of the metal foil) using a coater, a polymer layer (PP with a thickness of 15 µm) was laminated on a surface of the first adhesive layer by an extrusion casting laminator (extrusion temperature of the equipment is set as 220 °C); and the other roll of the metal foils was taken, and by controlling a region to be coated, a second adhesive layer (aluminate ester coupling agent with a thickness of 0.08 µm, from Shandong Yuanhe New Material Technology Share Holding Co., Ltd) was coated on a surface of the metal foil corresponding to the first region using the coater. Finally, the two rolls of metal foils were attached such that the polymer layer and the second adhesive layer were bonded, to obtain a current collector C7 as shown in FIG. 7a and FIG. 7b. Where the size of the welding region in the extension direction of the current collector is 100 mm, and the size of the non-welding region in the extension direction of the current collector is 800 mm.

### Comparative example 7

A preparation method of a current collector C7a of the present comparative example is substantially the same as the preparation method of Example 7, except that the polymer layer is provided in all the regions between the first metal layer and the second metal layer through the first adhesive layer and the second adhesive layer. A specific structure is as shown in FIG. 8a and FIG. 8b.

### Example 8

The current collector of the present example is prepared by the following method:
Two rolls of metal foils (aluminum foils with a thickness of 5 µm) were taken, and the two rolls of metal foils were each washed with 0.02 g/L of sulfuric acid solution for 1 min, and then washed with 0.02 g/L of sodium hydroxide solution for 1 min, and then washed with deionized water for 25 min, and finally washed with acetone for 25 min and air dried.

One roll of the pre-processed metal foils was taken, and by controlling a region to be coated, a first adhesive layer (polyurethane binder with a thickness of 3 µm, from Wuxi Boai Adhesive Factory) was coated on a surface of the metal foil corresponding to a first region (the first region and a second region are arranged along an extension direction of the metal foil) using a coater, a polymer layer (PP with a thickness of 1 µm) was laminated on a surface of the first adhesive layer by an extrusion casting laminator (extrusion temperature of the equipment is set as 220 °C); and the other roll of the metal foils was taken, and by controlling a region to be coated, a second adhesive layer (polyurethane binder with a thickness of 3 µm, from Wuxi Boai Adhesive Factory) was coated on a surface of the metal foil corresponding to the first region using the coater. Finally, the two rolls of metal foils were attached such that the polymer layer and the second adhesive layer were bonded, to obtain a current collector C8 as shown in FIG. 7a and FIG. 7b. Where the size of the welding region in the extension direction of the current collector is 100 mm, and the size of the non-welding region in the extension direction of the current collector is 100 mm.

### Comparative example 8

A preparation method of a current collector C8a of the present comparative example is substantially the same as Example 8, except that the polymer layer is provided in all the regions between the first metal layer and the second metal layer through the first adhesive layer and the second adhesive layer. A specific structure is as shown in FIG. 8a and FIG. 8b.

### Example 9

The current collector of the present example is prepared by the following method:
Two rolls of metal foils (aluminum foils with a thickness of 2 µm) were taken, and the two rolls of metal foils were each washed with 0.001 g/L of phosphoric acid solution for 5 min, and then washed with 0.001 g/L of sodium hydroxide solution for 5 min, and then washed with deionized water for 1 min, and finally washed with dimethyl carbonate for 1 min and air dried.

One roll of the pre-processed metal foils was taken, and by controlling a region to be coated, a first adhesive layer (polyurethane binder with a thickness of 0.1 µm, from Wuxi Boai Adhesive Factory) was coated on a surface of the metal foil corresponding to a first region (the first region and a second region are arranged along a direction perpendicular to an extension direction of the metal foil) using a coater, a polymer layer (PET with a thickness of 10 µm) was laminated on a surface of the first adhesive layer by an extrusion casting laminator (extrusion temperature of the equipment is set as 284 °C), and a second adhesive layer (polyurethane binder with a thickness of 0.1 µm, from Wuxi Boai Adhesive Factory) was coated on a surface of the polymer layer using the coater. Finally, the two rolls of metal foils were attached, to obtain a current collector A1 as shown in FIG. 1a and FIG. 1b. Where the welding region has a width of 100 mm, and the non-welding region has a width of 400 mm.

### Comparative example 9

A preparation method of a current collector A1a of the present comparative example is substantially the same as the preparation method of Example 9, except that the polymer layer is provided in all the regions between the first metal layer and the second metal layer through the first adhesive layer and the second adhesive layer. A specific structure is as shown in FIG. 8a and FIG. 8b.

### Example 10

The current collector of the present example is prepared by the following method:
Two rolls of metal foils (copper foils with a thickness of 3 µm) were taken, and the two rolls of metal foils were each washed with 0.5 g/L of phosphoric acid solution for 0.5 min, and then washed with 0.5 g/L of sodium hydroxide solution for 0.5 min, and then washed with deionized water for 30 min, and finally washed with acetone for 30 min and air dried.

One roll of the pre-processed metal foils was taken, and by controlling a region to be coated, a first adhesive layer (polyurethane binder with a thickness of 1 µm, from Wuxi Boai Adhesive Factory) was coated on a surface of the metal foil corresponding to a first region (the first region and a second region are arranged along a direction perpendicular to an extension direction of the metal foil) using a coater, a polymer layer (PET with a thickness of 3 µm) was laminated on a surface of the first adhesive layer by an extrusion casting laminator (extrusion temperature of the equipment is set as 284 °C), and a second adhesive layer (polyurethane binder with a thickness of 1 µm, from Wuxi Boai Adhesive Factory) was coated on a surface of the polymer layer using the coater. Finally, the two rolls of metal foils were attached, to obtain a current collector A2 as shown in FIG. 2a and FIG. 2b. Where the welding region has a width of 100 mm, and the non-welding region has a width of 300 mm.

### Comparative example 10

A preparation method of a current collector A2a of the present comparative example is substantially the same as the preparation method of Example 10, except that the polymer layer is provided in all the regions between the first metal layer and the second metal layer through the first adhesive layer and the second adhesive layer. A specific structure is as shown in FIG. 8a and FIG. 8b.

### Example 11

The current collector of the present example is prepared by the following method:
Two rolls of metal foils (copper foils with a thickness of 1 µm) were taken, and the two rolls of metal foils were each washed with 0.1 g/L of phosphoric acid solution for 1 min, and then washed with 0.1 g/L of sodium hydroxide solution for 1 min, and then washed with deionized water for 10 min, and finally washed with absolute ethanol for 10 min and air dried.

One roll of the pre-processed metal foils was taken, and by controlling a region to be coated, a first adhesive layer (polyacrylic resin binder with a thickness of 0.5 µm, from Wuxi Boai Adhesive Factory) was coated on a surface of the metal foil corresponding to a first region (the first region and a second region are arranged along a direction perpendicular to an extension direction of the metal foil) using a coater, a polymer layer (PET with a thickness of 5 µm) was laminated on a surface of the first adhesive layer by an extrusion casting laminator (extrusion temperature of the equipment is set as 284 °C), and a second adhesive layer (polyurethane binder with a thickness of 0.5 µm, from Wuxi Boai Adhesive Factory) was coated on a surface of the polymer layer using the coater. Finally, the two rolls of metal foils were attached, to obtain a current collector A3 as shown in FIG. 3a and FIG. 3b. Where the welding region has a width of 100 mm, and the non-welding region has a width of 200 mm.

### Comparative example 11

A preparation method of a current collector A3a of the present comparative example is substantially the same as the preparation method of Example 11, except that the polymer layer is provided in all the regions between the first metal layer and the second metal layer through the first adhesive layer and the second adhesive layer. A specific structure is as shown in FIG. 8a and FIG. 8b.

### Example 12

The current collector of the present example is prepared by the following method:
Two rolls of metal foils (copper foils with a thickness of 0.5 µm) were taken, and the two rolls of metal foils were each washed with 0.01 g/L of sulfuric acid solution for 2 min, and then washed with 0.01 g/L of potassium hydroxide solution for 2 min, and then washed with deionized water for 15 min, and finally washed with acetone for 15 min and air dried.

One roll of the pre-processed metal foils was taken, and by controlling a region to be coated, a first adhesive layer (silane coupling agent KH570 with a thickness of 0.01 µm, from Shandong Yuanhe New Material Technology Share Holding Co., Ltd) was coated on a surface of the metal foil corresponding to a first region (the first region and a second region are arranged along a direction perpendicular to an extension direction of the metal foil) using a coater, a polymer layer (PET with a thickness of 5 µm) was laminated on a surface of the first adhesive layer by an extrusion casting laminator (extrusion temperature of the equipment is set as 284 °C), and a second adhesive layer (silane coupling agent KH570 with a thickness of 0.01 µm, from Shandong Yuanhe New Material Technology Share Holding Co., Ltd) was coated on a surface of the polymer layer using the coater. Finally, the two rolls of metal foils were attached, to obtain a current collector A4 as shown in FIG. 4a and FIG. 4b. Where the welding region has a width of 125 mm, and the non-welding region has a width of 125 mm.

### Comparative example 12

A preparation method of a current collector A4a of the present comparative example is substantially the same as the preparation method of Example 12, except that the polymer layer is provided in all the regions between the first metal layer and the second metal layer through the first adhesive layer and the second adhesive layer. A specific structure is as shown in FIG. 8a and FIG. 8b.

### Example 13

Two rolls of metal foils (stainless steel foils with a thickness of 3.5 µm) were taken, and the two rolls of metal foils were each washed with 0.02 g/L of sulfuric acid solution for 2 min, and then washed with 0.02 g/L of potassium hydroxide solution for 2 min, and then washed with deionized water for 20 min, and finally washed with acetone for 20 min and air dried.

One roll of the pre-processed metal foils was taken, and by controlling a region to be coated, a first adhesive layer (silane coupling agent KH570 with a thickness of 0.03 µm, from Shandong Yuanhe New Material Technology Share Holding Co., Ltd) was coated on a surface of the metal foil corresponding to a first region (the first region and a second region are arranged along a direction perpendicular to an extension direction of the metal foil) using a coater, a polymer layer (PP with a thickness of 4 µm) was laminated on a surface of the first adhesive layer by an extrusion casting laminator (extrusion temperature of the equipment is set as 220 °C), and the other roll of the metal foils was taken, and by controlling a region to be coated, a second adhesive layer (silane coupling agent KH570 with a thickness of 0.03 µm, from Shandong Yuanhe New Material Technology Share Holding Co., Ltd) was coated on a surface of the metal foil corresponding to the first region using the coater. Finally, the two rolls of metal foils were attached such that the polymer layer and the second adhesive layer were bonded, to obtain a current collector A5 as shown in FIG. 5a and FIG. 5b. Where the welding region has a width of 100 mm, and the non-welding region has a width of 100 mm.

### Comparative example 13

A preparation method of a current collector A5a of the present comparative example is substantially the same as the preparation method of Example 13, except that the polymer layer is provided in all the regions between the first metal layer and the second metal layer through the first adhesive layer and the second adhesive layer. A specific structure is as shown in FIG. 8a and FIG. 8b.

### Example 14

The current collector of the present example is prepared by the following method:
Two rolls of metal foils (silver foils with a thickness of 0.1 µm) were taken, and the two rolls of metal foils were each washed with 0.2 g/L of sulfuric acid solution for 1 min, and then washed with 0.2 g/L of sodium hydroxide solution for 1 min, and then washed with deionized water for 25 min, and finally washed with acetone for 25 min and air dried.

One roll of the pre-processed metal foils was taken, and by controlling a region to be coated, a first adhesive layer (urea-formaldehyde resin binder with a thickness of 0.3 µm, from Dongguan Suyu Chemical Co., Ltd) was coated on a surface of the metal foil corresponding to a first region (the first region and a second region are arranged along a direction perpendicular to an extension direction of the metal foil) using a coater, a polymer layer (PP with a thickness of 15 µm) was laminated on a surface of the first adhesive layer by an extrusion casting laminator (extrusion temperature of the equipment is set as 220 °C). The other roll of the metal foils was taken, and by controlling a region to be coated, a second adhesive layer (epoxy resin binder with a thickness of 0.3 µm, from Dongguan Suyu Chemical Co., Ltd) was coated on a surface of the metal foil corresponding to the first region using the coater. Finally, the two rolls of metal foils were attached such that the polymer layer and the second adhesive layer were bonded, to obtain a current collector A6 as shown in FIG. 6a and FIG. 6b. Where the welding region has a width of 100 mm, and the non-welding region has a width of 100 mm.

### Comparative example 14

A preparation method of a current collector A6a of the present comparative example is substantially the same as the preparation method of Example 14, except that the polymer layer is provided in all the regions between the first metal layer and the second metal layer through the first adhesive layer and the second adhesive layer. A specific structure is as shown in FIG. 8a and FIG. 8b.

### Example 15

The current collector of the present example is prepared by the following method:
Two rolls of metal foils (titanium foils with a thickness of 1 µm) were taken, and the two rolls of metal foils were each washed with 0.1 g/L of sulfuric acid solution for 1 min, and then washed with 0.05 g/L of sodium hydroxide solution for 1 min, and then washed with deionized water for 20 min, and finally washed with acetone for 25 min and air dried.

One roll of the pre-processed metal foils was taken, and by controlling a region to be coated, a first adhesive layer (titanate ester coupling agent with a thickness of 0.08 µm, from Shandong Yuanhe New Material Technology Share Holding Co., Ltd) was coated on a surface of the metal foil corresponding to a first region (the first region and a second region are arranged along an extension direction of the metal foil) using a coater, a polymer layer (PP with a thickness of 15 µm) was laminated on a surface of the first adhesive layer by an extrusion casting laminator (extrusion temperature of the equipment is set as 220 °C); and the other roll of the metal foils was taken, and by controlling a region to be coated, a second adhesive layer (titanate ester coupling agent with a thickness of 0.08 µm, from Shandong Yuanhe New Material Technology Share Holding Co., Ltd) was coated on a surface of the metal foil corresponding to the first region using the coater. Finally, the two rolls of metal foils were attached such that the polymer layer and the second adhesive layer were bonded, to obtain a current collector A7 as shown in FIG. 7a and FIG. 7b. Where the size of the welding region in the extension direction of the current collector is 100 mm, and the size of the non-welding region in the extension direction of the current collector is 800 mm.

### Comparative example 15

A preparation method of a current collector A7a of the present comparative example is substantially the same as the preparation method of Example 15, except that the polymer layer is provided in all the regions between the first metal layer and the second metal layer through the first adhesive layer and the second adhesive layer. A specific structure is as shown in FIG. 8a and FIG. 8b.

### Example 16

The current collector of the present example is prepared by the following method:
Two rolls of metal foils were taken (copper foils with a thickness of 4 µm), the two rolls of metal foils were each washed with 0.02 g/L of sulfuric acid solution for 1 min, and then washed with 0.02 g/L of sodium hydroxide solution for 1 min, and then washed with deionized water for 25 min, and finally washed with acetone for 25 min and air dried.

One roll of the pre-processed metal foils was taken, and by controlling a region to be coated, a first adhesive layer (polyurethane binder with a thickness of 2 µm, from Wuxi Boai Adhesive Factory) was coated on a surface of the metal foil corresponding to a first region (the first region and a second region are arranged along an extension direction of the metal foil) using a coater, a polymer layer (PP with a thickness of 2 µm) was laminated on a surface of the first adhesive layer by an extrusion casting laminator (extrusion temperature of the equipment is set as 220 °C); and the other roll of the metal foils was taken, and by controlling a region to be coated, a second adhesive layer (polyurethane binder with a thickness of 2 µm, from Wuxi Boai Adhesive Factory) was coated on a surface of the metal foil corresponding to the first region using the coater. Finally, the two rolls of metal foils were attached such that the polymer layer and the second adhesive layer were bonded, to obtain a current collector A8 as shown in FIG. 7a and FIG. 7b. Where the size of the welding region in the extension direction of the current collector is 100 mm, and the size of the non-welding region in the extension direction of the current collector is 1000 mm.

### Comparative example 16

A preparation method of a current collector A8a of the present comparative example is substantially the same as the preparation method of Example 16, except that the polymer layer is provided in all the regions between the first metal layer and the second metal layer through the first adhesive layer and the second adhesive layer. A specific structure is as shown in FIG. 8a and FIG. 8b.

### Example 17-Example 24

A positive slurry was coated on the non-welding regions of the positive current collectors C1-C8, dried at 130°C and then rolled under a pressure of 40 tons, and then slit into positive electrode plates Z1-Z8 (slitting according to the sizes of the electrode plates required by the batteries, and the resulting positive electrode plates are left with a welding region for welding the tab). The positive electrode plates have an electrode plate surface density of 20 mg/cm², and a compaction density of 4.17 g/cm³.

A preparation method of the positive slurry includes: 97 parts by mass of lithium cobaltate as positive electrode material (Xiamen Tungsten Co., Ltd., 4.45V lithium cobaltate, specific capacity of 181mAh/g), 1 part by mass of acetylene black as conductive agent, 0.5 parts by mass of carbon nanotube as conductive agent, 1.5 parts by mass of PVDF as binder (molecular weight of 1 million) and 60 parts by mass of NMP as solvent were stirred for 4 h through a double planetary mixer under vacuum at revolution of 30 r/min and rotation of 2000 r/min, to obtain a uniform positive slurry.

### Comparative example 17-Comparative example 24

The positive slurry in Example 17 was coated on the positive current collectors C1a-C8a (the remaining small parts of the metal foils are not coated with the slurry but are used for welding the tabs, and the positions of the regions where no slurry is coated are in one-to-one correspondence with the positions of the welding regions in Example 17-Example 24, for example, the position of the region where no slurry is coated in Comparative example 17 is the same as the position of the welding region in Example 17, and so on), dried at 130 °C and then rolled under a pressure of 40 tons, and then slit into positive electrode plates Z1a-Z8a (the sizes of the positive electrode plates after slitting are in one-to-one correspondence with the sizes of the positive electrode plates after slitting in Example 17-Example 24, for example, the size of the positive electrode plate obtained after slitting in Comparative Example 17 is the same as the size of the positive electrode plate after slitting in Example 17, and so on). The positive electrode plates have a surface density of 20 mg/cm², and a compaction density of 4.17 g/cm³.

### Example 25-Example 32

A negative slurry was coated on the non-welding regions on the negative current collectors A1-A8, dried at 110°C, then rolled under a pressure of 40 tons, and then slit into negative electrode plates F1-F8 (slitting according to the sizes of the electrode plates required by the batteries, and the resulting positive electrode plates are left with a welding region for welding the tab). The negative electrode plates have an electrode plate surface density of 11 mg/cm², and a compaction density of 1.78 g/cm³.

A preparation method of the negative slurry includes: 97 parts by mass of graphite as positive electrode material (Shenzhen BTR New Energy Material Co., Ltd, specific capacity of 355mAh/g), 1.5 part by mass of carbon black as conductive agent, 1.0 part by mass of SBR as binder, 0.5 parts by mass of carboxymethyl cellulose and 100 parts by mass of water as solvent were stirred for 4 h through a double planetary mixer under vacuum at revolution of 30 r/min and rotation of 150 r/min, to obtain a uniform negative slurry.

### Comparative example 25-Comparative example 32

The negative slurry in Example 25 was coated on the negative current collectors A1a-A8a (the remaining small parts of the metal foils are not coated with the slurry but are used for welding the tabs, and the positions of the regions where no slurry is coated are in one-to-one correspondence with the positions of the welding regions in Example 25-Example 32, for example, the position of the region where no slurry is coated in Comparative example 25 is the same as the position of the welding region in Example 25, and so on), dried at 110 °C, and then rolled under a pressure of 40 tons, slit into negative electrode plates F1a-F8a (the sizes of the negative electrode plates after slitting are in one-to-one correspondence with the sizes of the negative electrode plates after slitting in Example 25-Example 32, for example, the size of the negative electrode plate obtained after slitting in Comparative example 25 is the same as the size of the negative electrode plate after slitting in Example 25, and so on). The negative electrode plates have a surface density of 11 mg/cm², and a compaction density of 1.78 g/cm³.

### Experimental Example

### 1. Welding strength test of tab

Positive tabs (purchased from Lianyungang Delixin Electronic Technology Co., Ltd., the material of the positive tabs is aluminum) were welded, by ultrasonic welding or laser welding, to the welding regions of the positive electrode plates Z1-Z8 in the examples and of the positive electrode plates Z1a-Z8a in the comparative examples;
negative tabs (nickel tabs from Lianyungang Delixin Electronic Technology Co., Ltd) were welded, by ultrasonic welding or laser welding, to the welding regions of the negative electrode plates F1-F8 in the examples and of the negative electrode plates F1a-F8a in the comparative examples;
where the ultrasonic welding is performed by adopting UM-20 ultrasonic metal welding machine from STGN Electronic Technology Co., Ltd., welding parameters: welding power 3000W, welding frequency 20kHz, welding amplitude 40 µm, welding time 0.42 s, and welding pressure 0.3 MPa.

Where the laser welding is performed by adopting ZXL-200W laser welding machine from Dongguan Zhengxin Laser Technology Co., Ltd, welding parameters: laser wavelength 1064 nm, laser power 200 W, pulse frequency 150 Hz, and pulse width 10 ms.

A tab welding strength test was performed on respective positive electrode plates and respective negative electrode plates after welding the tabs: LK-108A tensile tester from Force Control Instrument Technology Co., Ltd was used, the tabs were clamped with clamps, and then pull force values N when the tabs were pulled off from the current collectors and were measured by the tensile tester, where the widths of the tabs are D, and then the tab welding strength F=N/D can be calculated. The specific results are shown in Table 1-Table 2.

**Table 1**

| Positive electrode plate | Welding manner of positive tab | Welding strength of positive tab |
|---|---|---|
| Z1 | Ultrasonic welding | 0.62 |
| Z1a | Ultrasonic welding | 0.05 |
| Z2 | Ultrasonic welding | 0.54 |
| Z2a | Ultrasonic welding | 0.08 |
| Z3 | Ultrasonic welding | 0.51 |
| Z3a | Ultrasonic welding | 0.07 |
| Z4 | Laser welding | 0.64 |
| Z4a | Laser welding | 0.15 |
| Z5 | Laser welding | 0.55 |
| Z5a | Laser welding | 0.11 |
| Z6 | Laser welding | 0.54 |
| Z6a | Laser welding | 0.09 |
| Z7 | Ultrasonic welding | 0.43 |
| Z7a | Ultrasonic welding | 0.04 |
| Z8 | Ultrasonic welding | 0.42 |
| Z8a | Ultrasonic welding | 0.03 |

**Table 2**

| Negative electrode plate | Welding manner of negative tab | Welding strength of negative tab |
|---|---|---|
| F1 | Ultrasonic welding | 0.83 |
| F1a | Ultrasonic welding | 0.06 |
| F2 | Ultrasonic welding | 0.82 |
| F2a | Ultrasonic welding | 0.10 |
| F3 | Laser welding | 0.70 |
| F3a | Laser welding | 0.09 |
| F4 | Laser welding | 0.90 |
| F4a | Laser welding | 0.17 |
| F5 | Ultrasonic welding | 0.59 |
| F5a | Ultrasonic welding | 0.13 |
| F6 | Laser welding | 0.68 |
| F6a | Laser welding | 0.11 |
| F7 | Ultrasonic welding | 0.56 |
| F7a | Ultrasonic welding | 0.05 |
| F8 | Ultrasonic welding | 0.47 |
| F8a | Ultrasonic welding | 0.05 |

It can be seen from Table 1 to Table 2: when the tab welding is performed on the current collectors of the examples in the present application, the welding strength is greatly improved.

### 2. Tests of Internal resistance, Cycle performance and Temperature rise phenomenon of the lithium ion battery

The positive electrode plates and the negative electrode plates, which were welded with the tabs, were matched with polyethylene (PE) porous diaphragm (wet-process diaphragm ND12 produced by Shanghai Enjie New Material Technology Co., Ltd, with a thickness of 12µm) and an lithium ion battery electrolyte (LBC445B33 type electrolyte from Shenzhen Capchem Technology Co., Ltd.), to prepare lithium ion batteries by a conventional preparation process of a lithium ion battery, lithium ion batteries were marked as batteries D1-D8 and D1a-D8a, and the specific information on the batteries are shown in Table 3.

A method for detecting the internal resistances of the lithium ion batteries includes: fully charging the batteries (the charging system: charging at a constant current of 0.5C to 4.45V, and then charging at a constant voltage until the current drops to 0.02C) and then testing the internal resistance of the batteries (RBM-200 smart battery internal resistance tester from Shenzhen Chaosisi Technology Co., Ltd., AC signal frequency is set as 1 KHz).

The lithium ion battery cycle life test method includes: performing a charge-discharge cycle test at 25°C on the batteries using a battery charge-discharge tester, the charge-discharge system is: charging at a constant current of 0.5C to 4.45V, and then charging at a constant voltage until the current drops to 0.02C, and standing for 5 minutes, and then discharging the batteries to 2.5V at a constant current of 0.5C. This is 1 cycle. The number of cycles of the battery charge and discharge tester was set as 5000. As the batteries cycled, the capacity of the batteries faded continuously, and the number of cycles experienced when the capacity faded to 80% of the first discharge capacity was recorded as the cycle lives of the batteries.

A temperature rise test method of the lithium ion batteries discharged at 1C rate refers to the Household and Commercial Battery Standard UL2054: 2009.

The above test results are shown in Table 3.

**Table 3**

| Battery | Positive electrode plate | Negative electrode plate | Internal resistance (mΩ) | Cycle life (25 °C, 0.5C/0.5C) | Discharge temperature rise at 1C rate (°C) | Type of battery |
|---|---|---|---|---|---|---|
| D1 | Z1 | F1 | 33 | 1423 | 6.2 | Laminating |
| D1a | Z1a | F1a | 45 | 757 | 11.0 | Laminating |
| D2 | Z2 | F2 | 31 | 1388 | 5.8 | Laminating |
| D2a | Z2a | F2a | 44 | 829 | 10.6 | Laminating |
| D3 | Z3 | F3 | 30 | 1356 | 6.1 | Laminating |
| D3a | Z3a | F3a | 46 | 791 | 11.3 | Laminating |
| D4 | Z4 | F4 | 29 | 1401 | 7.1 | Laminating |
| D4a | Z4a | F4a | 42 | 812 | 12.5 | Laminating |
| D5 | Z5 | F5 | 30 | 1455 | 6.9 | Laminating |
| D5a | Z5a | F5a | 43 | 824 | 11.8 | Laminating |
| D6 | Z6 | F6 | 31 | 1363 | 6.4 | Laminating |
| D6a | Z6a | F6a | 44 | 760 | 9.9 | Laminating |
| D7 | Z7 | F7 | 36 | 1333 | 8.9 | Laminating |
| D7a | Z7a | F7a | 50 | 781 | 14.5 | Laminating |
| D8 | Z8 | F8 | 37 | 1400 | 7.7 | Winding |
| D8a | Z8a | F8a | 52 | 789 | 13.8 | Winding |

It can be seen from Table 3: since the lithium ion batteries of the examples in the present application include the current collector of the present application, they have relative low internal resistance, and significantly improved cycle performance; in addition, since the temperature rise phenomenon is controlled, the lithium ion batteries of the present application are not prone to high temperature thermal runaway during repeated charging and discharging, and have an excellent safety performance.

Finally, it should be noted that: the above examples are only used to illustrate the technical solutions of the present application, not to limit them; although of the present application have been described in detail with reference to the examples described above, those ordinary skill in the art should be understood that: it is still possible to modify the technical solutions recorded in the examples described above, or equivalently replace some or all of the technical features therein; and these modifications or replacements do not make the corresponding technical solutions depart from the scope of the technical solutions of the examples of present application.

## Claims

1. A current collector for a lithium ion battery, comprising a first metal layer (1) and a second metal layer (2), which are provided in a laminated manner, wherein at least one first region (3) and at least one second region (4) are comprised between the first metal layer (1) and the second metal layer (2), and the first region (3) and the second region (4) are alternately arranged in a first direction (A) which is perpendicular to a rolling direction of the current collector;
the first region (3) is provided with a polymer layer (5), and the polymer layer (5) is respectively bonded to the first metal layer (1) and the second metal layer (2) through two adhesive layers;
the first metal layer (1) corresponding to the first region (3) and the first metal layer (1) corresponding to the second region (4) are in an integrated structure, and the second metal layer (2) corresponding to the first region (3) and the second metal layer (2) corresponding to the second region (4) are in an integrated structure; and
a thickness of the first metal layer (1) and/or the second metal layer (2) is 0.1-5 µm.

2. The current collector according to claim 1, wherein the thickness of the first metal layer (1) and/or the second metal layer (2) is 0.5-2 µm.

3. The current collector according to claim 1 or 2, wherein a thickness of the polymer layer (5) is 1-15 µm.

4. The current collector according to claim 3, wherein the thickness of the polymer layer (5) is 3-10 µm.

5. The current collector according to any one of claims 1 to 4, wherein a thickness of the adhesive layer is 0.01-3 µm.

6. The current collector according to claim 5, wherein the thickness of the adhesive layer is 0.1-1 µm.

7. The current collector according to any one of claims 1 to 6, wherein a material of the first metal layer (1) and/or the second metal layer (2) is selected from at least one of aluminum, copper, nickel, titanium, silver, stainless steel, nickel-copper alloy and aluminum-zirconium alloy.

8. The current collector according to any one of claims 1 to 7, wherein a material of the polymer layer (5) is selected from at least one of polyterephthalate, polyamide, polyimide, polyethylene, polypropylene, polystyrene, polyvinyl chloride, polyethylene terephthalate, polybutylene terephthalate, poly(p-phenylene terephthamide), polypropylene ethylene, acrylonitrile-butadiene-styrene copolymer, polyvinyl formal, polyvinyl butyral, polyurethane, polyacrylonitrile, polyvinyl acetate, polyoxymethylene, phenolic resin, epoxy resin, polytetrafluoroethylene, polyvinylidene fluoride, silicone rubber, polycarbonate, polysulfone, polyethersulfone and polyphenylene ether.

9. The current collector according to any one of claims 1 to 8, wherein a material of the adhesive layer is selected from at least one of a polyurethane binder, a polyacrylic resin binder, a polyvinyl acetate binder, an urea-formaldehyde resin binder, an epoxy resin binder, and a coupling agent.

10. The current collector according to any one of claims 1 to 9, wherein in the first direction (A), a length of the first region (3) is greater than or equal to a length of the second region (4).

11. An electrode plate, comprising the current collector according to any one of claims 1 to 10.

12. A lithium ion battery, comprising the electrode plate according to claim 11.

## Patentansprüche

1. Stromabnehmer für eine Lithium-Ionen-Batterie, umfassend eine erste Metallschicht (1) und eine zweite Metallschicht (2), die als Verbundmaterial bereitgestellt sind, wobei mindestens ein erster Bereich (3) und mindestens ein zweiter Bereich (4) zwischen der ersten Metallschicht (1) und der zweiten Metallschicht (2) angeordnet sind, und der erste Bereich (3) und der zweite Bereich (4) abwechselnd in einer ersten Richtung (A) angeordnet sind, die senkrecht zu einer Walzrichtung des Stromabnehmers verläuft;
der erste Bereich (3) mit einer Polymerschicht (5) bereitgestellt ist und die Polymerschicht (5) jeweils über zwei Haftschichten mit der ersten Metallschicht (1) und der zweiten Metallschicht (2) verbunden ist;
die erste Metallschicht (1), die dem ersten Bereich (3) entspricht, und die erste Metallschicht (1), die dem zweiten Bereich (4) entspricht, in einer integrierten Struktur vorliegen, und wobei die zweite Metallschicht (2), die dem ersten Bereich (3) entspricht, und die zweite Metallschicht (2), die dem zweiten Bereich (4) entspricht, in einer integrierten Struktur vorliegen; und
eine Dicke der ersten Metallschicht (1) und/oder der zweiten Metallschicht (2) 0,1-5 µm beträgt.

2. Stromabnehmer nach Anspruch 1, wobei die Dicke der ersten Metallschicht (1) und/oder der zweiten Metallschicht (2) 0,5-2 µm beträgt.

3. Stromabnehmer nach Anspruch 1 oder 2, wobei die Dicke der Polymerschicht (5) 1-15 µm beträgt.

4. Stromabnehmer nach Anspruch 3, wobei die Dicke der Polymerschicht (5) 3-10 µm beträgt.

5. Stromabnehmer nach einem der Ansprüche 1 bis 4, wobei die Dicke der Haftschicht 0,01-3 µm beträgt.

6. Stromabnehmer nach Anspruch 5, wobei die Dicke der Haftschicht 0,1-1 µm beträgt.

7. Stromabnehmer nach einem der Ansprüche 1 bis 6, wobei ein Material der ersten Metallschicht (1) und/oder der zweiten Metallschicht (2) aus mindestens einem der folgenden Materialien ausgewählt ist: Aluminium, Kupfer, Nickel, Titan, Silber, Edelstahl, Nickel-Kupfer-Legierung und Aluminium-Zirkonium-Legierung.

8. Stromabnehmer nach einem der Ansprüche 1 bis 7, wobei ein Material der Polymerschicht (5) aus mindestens einem von Polyterephthalat, Polyamid, Polyimid, Polyethylen, Polypropylen, Polystyrol, Polyvinylchlorid, Polyethylenterephthalat, Polybutylenterephthalat, Poly(p-phenylenterephthalamid), Polypropylenethylen, Acrylnitril-Butadien-Styrol-Copolymer, Polyvinylformal, Polyvinylbutyral, Polyurethan, Polyacrylnitril, Polyvinylacetat, Polyoxymethylen, Phenolharz, Epoxidharz, Polytetrafluorethylen, Polyvinylidenfluorid, Silikonkautschuk, Polycarbonat, Polysulfon, Polyethersulfon und Polyphenylenether ausgewählt ist.

9. Stromabnehmer nach einem der Ansprüche 1 bis 8, wobei das Material der Haftschicht aus mindestens einem von einem Polyurethanbinder, einem Polyacrylharzbinder, einem Polyvinylacetatbinder, einem Harnstoff-Formaldehydharzbinder, einem Epoxidharzbinder und einem Haftvermittler ausgewählt ist.

10. Stromabnehmer nach einem der Ansprüche 1 bis 9, wobei in der ersten Richtung (A) eine Länge des ersten Bereichs (3) größer als oder gleich einer Länge des zweiten Bereichs (4) ist.

11. Elektrodenplatte, umfassend den Stromabnehmer nach einem der Ansprüche 1 bis 10.

12. Lithium-Ionen-Batterie, umfassend die Elektrodenplatte nach Anspruch 11.

## Revendications

1. Collecteur de courant pour une batterie lithium-ion, comprenant une première couche métallique (1) et une seconde couche métallique (2), qui sont disposées de manière stratifiée, dans lequel au moins une première région (3) et au moins une seconde région (4) sont comprises entre la première couche métallique (1) et la seconde couche métallique (2), et la première région (3) et la seconde région (4) sont disposées alternativement dans une première direction (A) qui est perpendiculaire à une direction de laminage du collecteur de courant ;
la première région (3) est pourvue d'une couche de polymère (5), et la couche de polymère (5) est respectivement liée à la première couche métallique (1) et à la seconde couche métallique (2) par l'intermédiaire de deux couches adhésives ;
la première couche métallique (1) correspondant à la première région (3) et la première couche métallique (1) correspondant à la seconde région (4) sont dans une structure intégrée, et la seconde couche métallique (2) correspondant à la première région (3) et la seconde couche métallique (2) correspondant à la seconde région (4) sont dans une structure intégrée ; et
une épaisseur de la première couche métallique (1) et/ou de la seconde couche métallique (2) est de 0,1 à 5 µm.

2. Collecteur de courant selon la revendication 1, dans lequel l'épaisseur de la première couche métallique (1) et/ou de la seconde couche métallique (2) est de 0,5 à 2 µm.

3. Collecteur de courant selon la revendication 1 ou 2, dans lequel l'épaisseur de la couche de polymère (5) est de 1 à 15 µm.

4. Collecteur de courant selon la revendication 3, dans lequel l'épaisseur de la couche de polymère (5) est de 3 à 10 µm.

5. Collecteur de courant selon l'une quelconque des revendications 1 à 4, dans lequel l'épaisseur de la couche adhésive est de 0,01 à 3 µm.

6. Collecteur de courant selon la revendication 5, dans lequel l'épaisseur de la couche adhésive est de 0,1 à 1 µm.

7. Collecteur de courant selon l'une quelconque des revendications 1 à 6, dans lequel un matériau de la première couche métallique (1) et/ou de la seconde couche métallique (2) est choisi à partir d'au moins un parmi : aluminium, cuivre, nickel, titane, argent, acier inoxydable, alliage nickel-cuivre et alliage aluminium-zirconium.

8. Collecteur de courant selon l'une quelconque des revendications 1 à 7, dans lequel un matériau de la couche polymère (5) est choisi à partir d'au moins un parmi : polytéréphtalate, polyamide, polyimide, polyéthylène, polypropylène, polystyrène, chlorure de polyvinyle, polyéthylène téréphtalate, polybutylène téréphtalate, poly(p-phénylène téréphtalamide), polypropylène éthylène, copolymère acrylonitrile-butadiène-styrène, formal de polyvinyle, polyvinyle butyral, polyuréthane, polyacrylonitrile, acétate de polyvinyle, polyoxyméthylène, résine phénolique, résine époxy, polytétrafluoroéthylène, fluorure de polyvinylidène, caoutchouc de silicone, polycarbonate, polysulfone, polyéthersulfone et éther de polyphénylène.

9. Collecteur de courant selon l'une quelconque des revendications 1 à 8, dans lequel un matériau de la couche adhésive est choisi à partir d'au moins parmi un liant de polyuréthane, un liant de résine polyacrylique, un liant d'acétate de polyvinyle, un liant de résine urée-formaldéhyde, un liant de résine époxy, et un agent de couplage.

10. Collecteur de courant selon l'une quelconque des revendications 1 à 9, dans lequel, dans la première direction (A), une longueur de la première région (3) est supérieure ou égale à une longueur de la seconde région (4).

11. Plaque d'électrode comprenant le collecteur de courant selon l'une quelconque des revendications 1 à 10.

12. Batterie lithium-ion comprenant la plaque d'électrode selon la revendication 11.
